# EUROPEAN PATENT SPECIFICATION

(11) **EP 1 286 317 B1**
(45) Date of publication and mention of the grant of the patent: **03.10.2012**
(21) Application number: 02255734.2
(22) Date of filing: 16.08.2002
(51) Int. Cl.: G07F 7/00, G07F 19/00, H04M 15/00, H04M 17/00

(54) **Method of crediting an account**
Verfahren zum laden eines kontos
Procédé d'approvisionnement d'un compte

(30) Priority: 22.08.2001 GB 0120412
(43) Date of publication of application: 26.02.2003
(60) Divisional application: 11165970.2
(73) Proprietor: Turriff International Limited, Road Town, Tortola (VG)
(72) Inventor: Moore, Tony, c/o Turriff International Limited, Road Town, Tortola (VG)
(74) Representative: Piotrowicz, Pawel Jan Andrzej

(56) References cited:
- EP-A- 0 848 360
- EP-A- 1 100 032
- WO-A-01/11857
- WO-A-01/48716
- WO-A-98/47112
- WO-A1-99/49424
- GB-A- 2 349 776

## Description

The present invention relates to method of crediting an account and has particular but not exclusive application to pre-paid mobile telephone accounts.

A mobile telecommunications system, which is also known as a cellular telephone network, can be used to provide a plurality of services to a subscriber using a mobile telephone handset, such as making and receiving voice calls, providing and retrieving voicemail and sending and receiving text messages. An example of such a system is one conforming to the Global System for Mobile Communications (GSM) recommendations.

The user can pay for these services generally in one of two ways. They can be charged according to use and billed at regular intervals by a service provider. Alternatively, the user can pre-pay for these services by depositing funds in an account associated with the handset. As and when a service is used, credit is deducted from the account. Provided there is sufficient credit in the account, then the service can be continued to be used. Nevertheless, a point usually comes when the account becomes depleted, in which case further funds are needed. The process of purchasing credit for the account is commonly known as "buying air-time".

Pre-payment can be achieved in several ways.

In one method, the user purchases a "top-up card" of fixed monetary value. The user then credits an account associated with their handset to the value of the card by registering the purchase with a service provider. To register the purchase, the user simply calls the service provider using the mobile telephone handset and keys in an identification number displayed on the card. Alternatively, the user calls the service provider from any fixed or mobile telephone and notifies the service provider of the number of the mobile telephone handset and the identification number.

Although the use of top-up cards is widespread, it suffers several drawbacks. It relies on the user being able to purchase a card of the appropriate type from a retailer. However, access to a retailer can be limited, particularly if the user is travelling abroad. Furthermore, the use of top-up cards is expensive since the cards are used only once and then discarded. The use of cards also requires a high level of security as they are deemed to be cash by criminal elements.

In another method, the user is provided with a swipe-card having a magnetic strip. The magnetic strip carries information relating to the handset. The user visits an agent representing the service provider and hands the swipe-card over to the agent together with payment. The agent then swipes the card through a reader and keys-in the monetary value to be credited to the account. The swipe-card is returned to the user once the process is completed. In this way, information regarding the handset and the credit can be transferred directly to the service provider. Thus, no further action is required on the part of the user.

In yet another method which is described in WO-A-0111857, a user can credit their account through a self-service vending machine. The user enters information into the vending machine, such as the identity of their service provider, the number of their handset, the amount to be credited and pays using cash or credit card. However, this type of vending machine is expensive to install and subject to vandalism. There is also the problem that cash is held in the machine and that the cash must be collected.

All of the above methods allow payment using cash, credit card or debit card.

WO-A-0111857 also describes a method of crediting an account using the mobile telephone handset only. However, the handset requires modification. Payment can only be made using credit and/or debit cards and details must be sent to the service provider. Thus, the handset requires encryption facilities for securely transferring credit and debit card details to the service provider.

WO-A-9847112 describes a method of electronically vending pre-paid values, such as cellular air time. A customer initiates a transaction and requests a value recharge at a network device, which can be a kiosk, an ATM, a point of sale device or a cell phone. The customer is requested to pay for the transaction. The payment process can either be with cash where the customer will be requested to feed the cash for payment into a note acceptor on the device or via a bank card.

The present invention seeks to provide an improved method of crediting an account.

According to a first aspect of the present invention there is provided a method of crediting an account as specified in claim 1 .

According to a second aspect of the present invention there is provided apparatus for crediting an as specified in claim 29.

Optional features are specified in the dependent claims.

Embodiments of the present invention will now be described, by way of example, with reference to the accompanying drawings in which:
Figure 1 is a schematic diagram of a mobile telecommunications network;
Figure 2 is a schematic illustration of a mobile telephone handset;
Figure 3 is schematic diagram of a billing centre;
Figure 4 is a schematic diagram of a point or interaction device;
Figure 5 is a schematic diagram of a secure host;
Figure 6 shows a process of requesting crediting of an account;
Figure 7 shows information flow between a handset, a secure host and a billing centre;
Figure 8 is a schematic diagram of a request for crediting an account sent from a handset to a secure host;
Figure 9 is a schematic diagram of a message sent from a secure host to a handset; Figure 10 (2 sheets) shows a process of validating the request of Figure 8;
Figure 11 shows information flow between a handset, point of interaction device, secure host, billing centre and bank; and
Figure 12 is a schematic diagram of a message sent from a point of interaction device to a secure host.

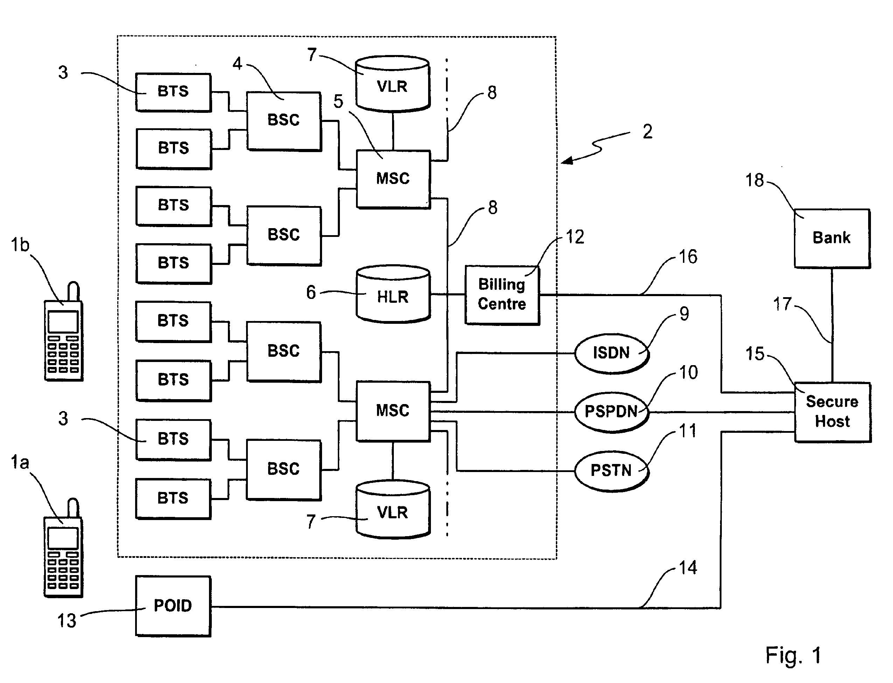

Referring to Figure 1, first and second mobile telephone handsets 1a, 1b are provided with voice and data services through a public land mobile network (PLMN) 2. The PLMN 2 includes a plurality of base transceiver stations (BTS) 3 for exchanging radio signals with the handsets 1a, 1b and a plurality of base station controllers (BSC) 4 for controlling groups of one or more BTSs 3. The PLMN 2 also includes a plurality of mobile switching centres (MSC) 5 for setting-up calls to and from a set of BSCs 4. The MSCs 5 are provided with a home location register (HLR) 6 which is a database for storing subscriber authentication data. Each MSC 5 is also provided with a visitor location register (VLR) 7 which is a database for storing subscriber authentication data of handsets 1a, 1b visiting an area served by the MSC 5.

Each MSC 5 is connected to other MSCs 5 via a network link 8. At least one MSC 5 is connected to other networks including an integrated service data network (ISDN) 9, a packet switched public data network (PSPDN) 10 and a public switched telephone network (PSTN) 11.

The PLMN 2 further includes a billing centre 12 for administering charging and billing. When a user subscribes to use the PLMN 2, their handset 1 is allocated with an international mobile subscriber identity (IMSI) and a mobile station integrated services digital network number (MSISDN). The IMSI and MSIDSN are stored in the HLR 6. The HLR 6 and the billing centre 12 determine whether the handsets 1a, 1b are entitled to use the PLMN 2.

Further information regarding GSM can be found in "The GSM System for Mobile Communications" by Michel Mouly and Marie-Bernadette Pautet, Cell & Sys. (1992).

The users of the handsets 1a, 1b have elected to pre-pay for services rather than be billed at regular intervals. Thus, the first and second handsets 1a, 1b are allocated first and second pre-pay accounts respectively.

To allow the users to credit their accounts, a plurality of point of interaction devices (POIDs) 13 are provided. The POIDs 13 can be fixed or portable and may be located inside or outside an area served by the PLMN 2. The users access the POIDs 13 to make payments as part of a process for crediting their accounts. The POIDs 13 and the crediting process will be described in more detail hereinafter.

The POIDs 13 are permanently or temporarily connected by a first leased line 14 to a secure host 15 for supervising crediting of pre-pay accounts. The secure host 15 is connected by a second leased line 16 to the billing centre 12. The secure host 15 is also connected via a third leased line 17 to a bank 18 for authorising credit and debit card payments.

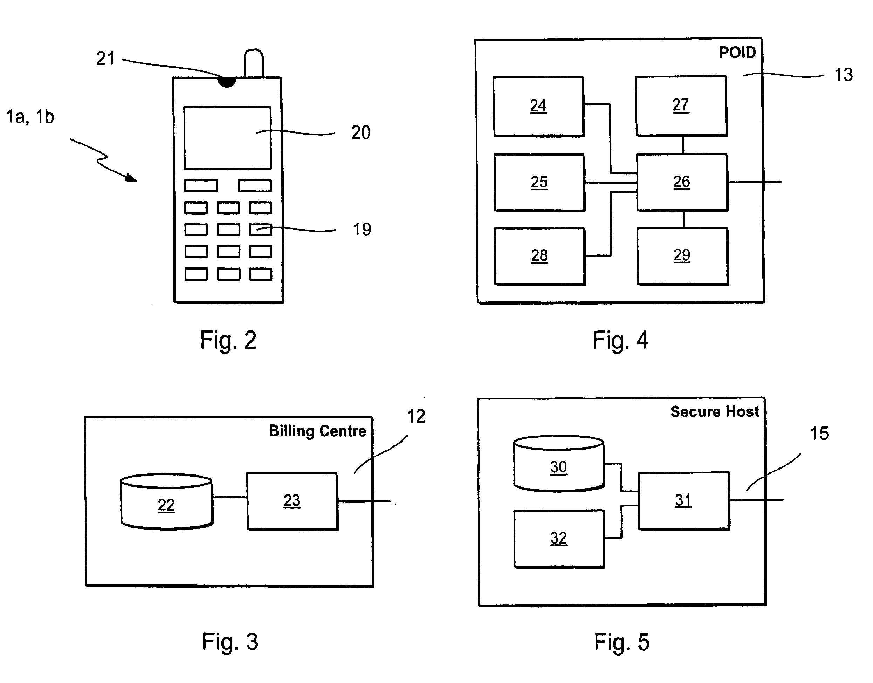

Referring to Figure 2, the mobile telephone handsets 1a, 1b include a keypad 19 for entering information, such as telephone numbers, a liquid crystal display (LCD) 20 for displaying information and a wireless communications transceiver 21 for exchanging information with other devices, including POIDs 13. In this example, the transceiver 21 comprises a light-emitting diode (LED) and a photodiode detector for sending and receiving signals respectively using infrared radiation. Each of the handsets 1a, 1b also includes a processor (not shown) for controlling the keypad 19, LCD 20 and transceiver 21, random access memory (not shown) for storing information and a subscriber identity module (SIM) card (not shown) for storing the I MSI and MSISDN of the handset 1a, 1b and an address book of telephone numbers which comprises a list of MSISDNs. It will be appreciated that other wireless communications transceivers 21 can be used such a Bluetooth™ transceiver. It will also be appreciated that the handsets 1a, 1b also include telephony circuits.

Referring to Figure 3, the billing centre 12 includes a subscriber database 22 storing pre-pay account details and a powerful personal computer 23. The personal computer 23 is used to deduct credit from the appropriate account whenever a call is made from a handset 1a, 1b and to credit the appropriate account whenever pre-payment occurs. It will be appreciated that the billing centre 12 may include a mainframe or a plurality of computers to manage pre-pay accounts.

Referring to Figure 4, the POIDs 13 each comprise a card reader 24 for reading information stored on a credit card, debit card or electronic money card, one or more wireless communications transceivers 25 for exchanging information with other devices including the handsets 1a, 1b, a microprocessor 26 and a display 27. The card reader 24 comprises a swipe-card reader for reading information stored on magnetic strips provided on credit and debit cards. Alternatively or additionally, the card reader 24 may comprise a smart card interface for exchanging information with a chip embedded into credit and debit cards. In this example, the one or more wireless communications transceivers 25 comprise an infrared transceiver comprising a light-emitting diode (LED) and a photodiode detector and a wireless transceiver comprising a Bluetooth™ transceiver chip. Optionally, the POID 13 can be provided with a cash receiver 28 for receiving cash payments using notes and/or coins. The POID 13 can also include a non-volatile memory 29 for storing data arising from off-line transactions. The POID 13 is provided with software, firmware or hardware for encrypting data for transmission to the secure host.

POIDs 13 can take many forms. For example, POIDs 13 can be single-function, used solely for the purpose of crediting pre-pay accounts, for example public kiosks or retail terminals. POIDs 13 can be multi-function and may be incorporated into other devices, such as public or private fixed telephones, cash dispensers, cash registers or Point of Sale (POS) devices. Furthermore, POIDs 13 can be fixed or portable.

Referring to Figure 5, the secure host 15 includes a database 30 for storing data relating to crediting requests and transactions, a powerful personal computer 31 and a host security module (HSM) 32 for providing secure cryptographic facilities for message authentication and transaction certificates. The HSM 32 may also be known as a Security Account Manager (SAM). The HSM 32 may be based on Data Encryption Standard (DES), Rivest, Shamir and Adleman (RSA) or other cryptographic systems. The secure host may be located at the premises of a bank, a trusted third party, the PLMN 2 operator or a service provider.

A process by which one or more accounts can be credited will now be described.

Briefly, the crediting process comprises two stages: a request stage and a payment stage:
In the request stage, the first handset 1a sends a request to the secure host 15 to credit the first and/or the second account. The secure host 15 passes on details of the request to the billing centre 12. If the billing centre 12 confirms that the or each account exists, then the secure host 15 sends a response back to the first handset 1a including information necessary for validating the request.

In the payment stage, the user approaches one of the POIDs 13 and transfers the validating information over a wireless link. This can be a point-to-point link, different from the wireless link used in telephony. The user is then prompted to make a payment. When payment is received, the POID 13 transmits the validating information together with information relating to the payment to the secure host 15. The secure host 15 checks the validating information and, if appropriate, performs card authorisation. If the request is valid and the payment is authorised, then the secure host 15 contacts the billing centre 12 to instruct crediting of the account.

Thus, the secure host 15 manages the request and validation and receives the payment. The secure host 15 settles with the billing centre 12 at a later stage.

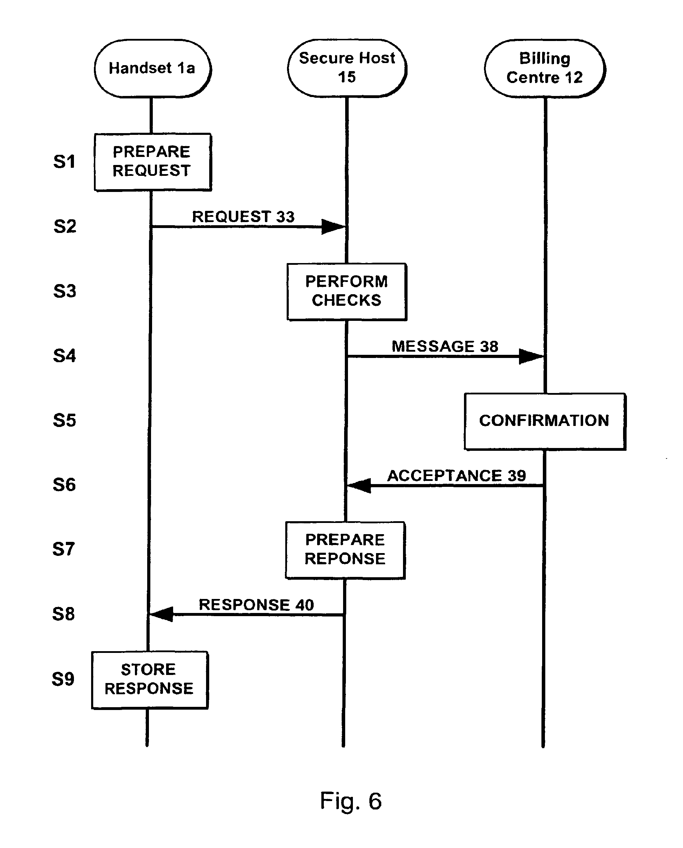

Referring to Figures 6, 7 and 8, the first user prepares a request 33 by selecting a prepayment menu on the display 20 and by entering details regarding the identity of the handsets whose accounts are to be credited and the corresponding amounts (step S1). The controller (not shown) automatically selects the MSISDN 34a of the first handset 1 a, in this case +44 777 11 22 33, and prompts the user to choose an amount of credit 35a. In this example, the user selects "£20" from a menu. The first user then selects the MSISDN 34b of the second handset 1b from the list of MSISDNs stored on the SIM card, e.g. +44 777 44 55 66, and keys-in "£10" of credit 35b. It will be appreciated that the user need not credit another handset's account. It will also be appreciated that the first user can add credit to additional accounts by entering further MSISDNs 34c and further values of credit 35c. It will also be appreciated that the first user need not credit the first account, i.e. their own account. The first user can set a flag 36 asking that an SMS acknowledgement be sent once the crediting process has been completed. Furthermore, the first user can set a first time period 37, for example one or two days, for completing the validation stage. The first user then enters the network number of the secure host 15, for example +44 207 77 88 99, and sends the request 33 to the secure host 15 as a short message service (SMS) text message (step S2). It will be appreciated that the PLMN operator may provide a charge-free network number. However, the request 33 can be sent using other resources, particularly if the handset is WAP-enabled or is a 3^{rd} generation telephone handset.

The request 33 is transmitted through the PLMN 2 and PSPDN 10 to the secure host 15, where it is checked to see to which PLMN the first and second handsets 1a, 1b belong and that a sensible value of credit has been chosen (step S3). If the secure host 15 is satisfied with the request, it forwards an advice message 38 to the billing centre 12 of the PLMN 2, including data relating to the first and second MSISDNs and the first expiry period 37, together with the corresponding values of credit and a reference number (step S4). It will be appreciated that separate messages 38 may be sent to different billing centres of different networks, if the first and second handsets 1a, 1b have different home PLMNs. If the secure host 15 is not satisfied with the request 33, then it sends an error message (not shown) to the first handset 1a and terminates the request process. If this happens, the secure host 15 may bar the first handset 1a from making further requests.

At the billing centre 12, the computer 23 checks whether the first and second MSISDNs exist and are active and whether the first time period 37 is acceptable (step S5). If the first and second MSISDNs are valid, then the billing centre 12 sends an acceptance message 39 to the secure host 15 including a second time period within which validation should be completed (step S6). The second time period can be one imposed by the billing centre 12 or the first time period 37 specified by the first user. If, on the other hand, there is a problem with either of the MSISDNs or any other information comprised in the advice message 38, the billing centre 12 may send a rejection message (not shown) rejecting all or part of the request 33. For example, the request in respect of the first handset 1a may be accepted, while the request regarding the second handset 1b may be rejected. Under these circumstances, either respective acceptance and rejection messages may be sent or a combined message may be transmitted to the secure host 15.

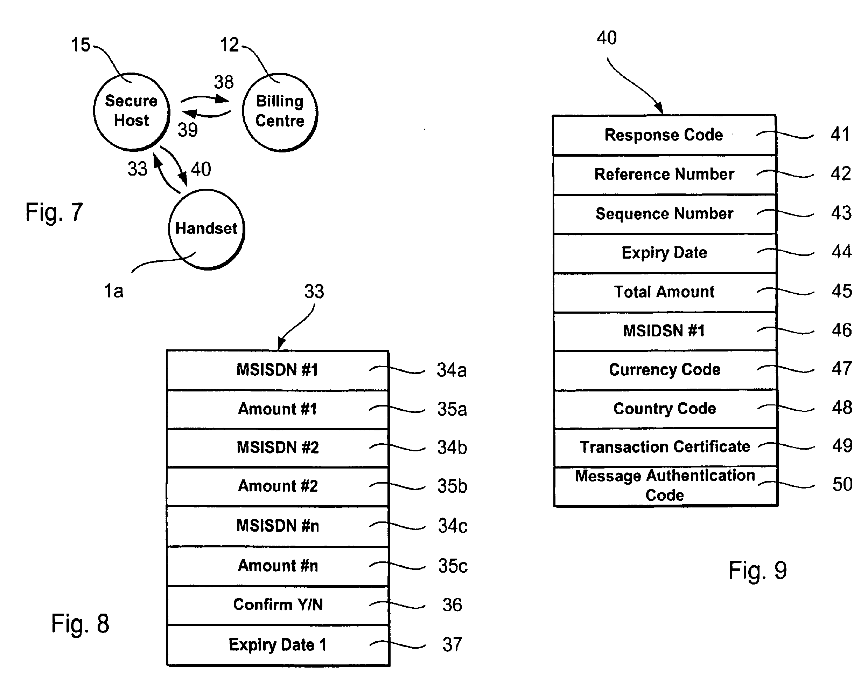

Referring to Figure 9, the secure host 15 prepares a response 40 for sending to the first handset 1a (step S7). The response 40 comprises a response code 41 which informs the handset 1a whether the request was successful, a reference number 42 which identifies the request to the secure host 15, a sequence number 43 which identifies the request to the handset 1a and an expiry date 44 for completing the validation stage which is computed from the second time period. The response 40 also comprises a total amount 45 to be paid, a number 46 for identifying the MSISDN of the handset that is requesting the pre-payment, a currency code 47 for indicating the currency of any credit card or debit card transaction, a country code 48 which identifies the origin of the MSISDN of the first handset 1a, a transaction certificate 49 for enabling the request to be validated at the payment stage and a message authentication code 50 which is data generated by encryption routines for ensuring that data comprised in the response is not corrupted or tampered with prior to transmission to a POID 13. The response 40 is sent to the first handset 1a (step S8), where it is stored in the SIM card (step S9).

If the secure host 15 receives a rejection message (not shown) from the billing centre 12, then the response 40 may be replaced with a refusal message (not shown). The refusal message can indicate the reason for refusing the request and, if appropriate, an invitation to retry.

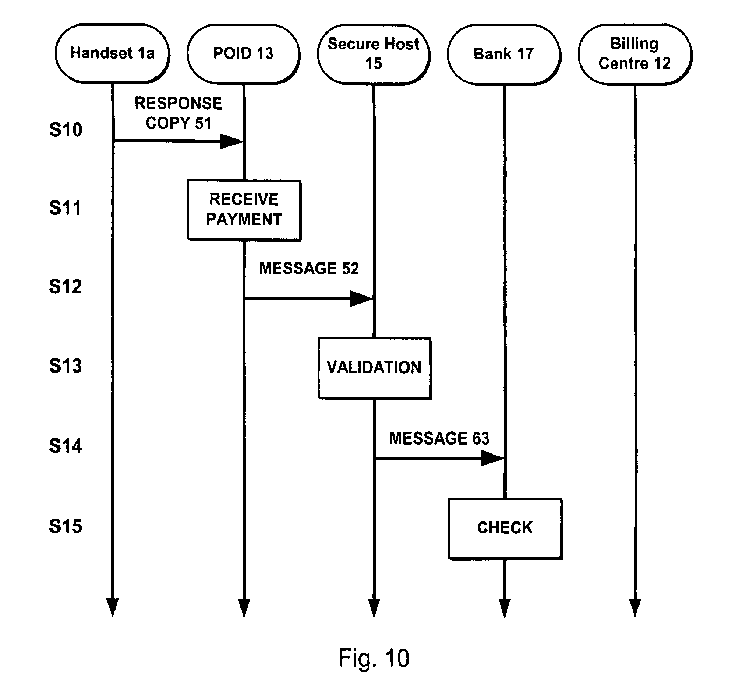

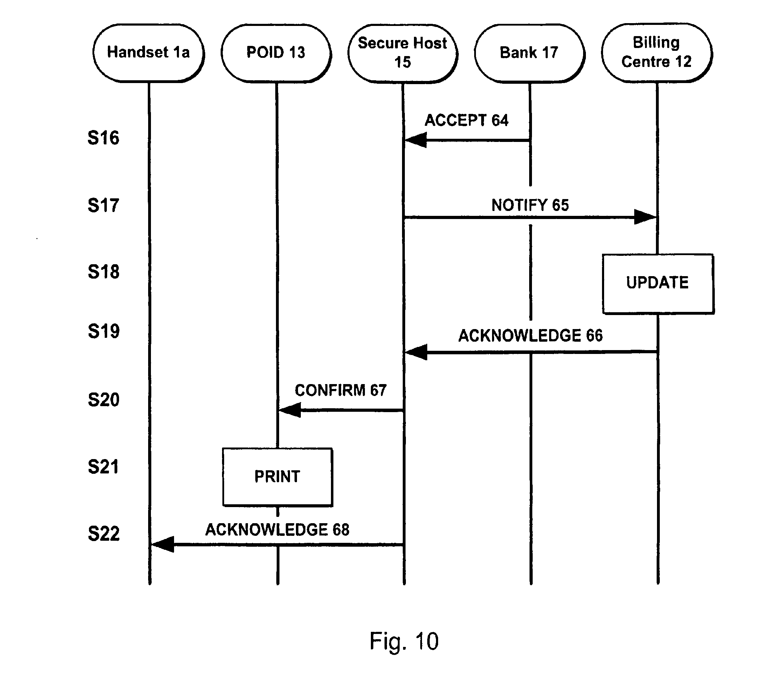

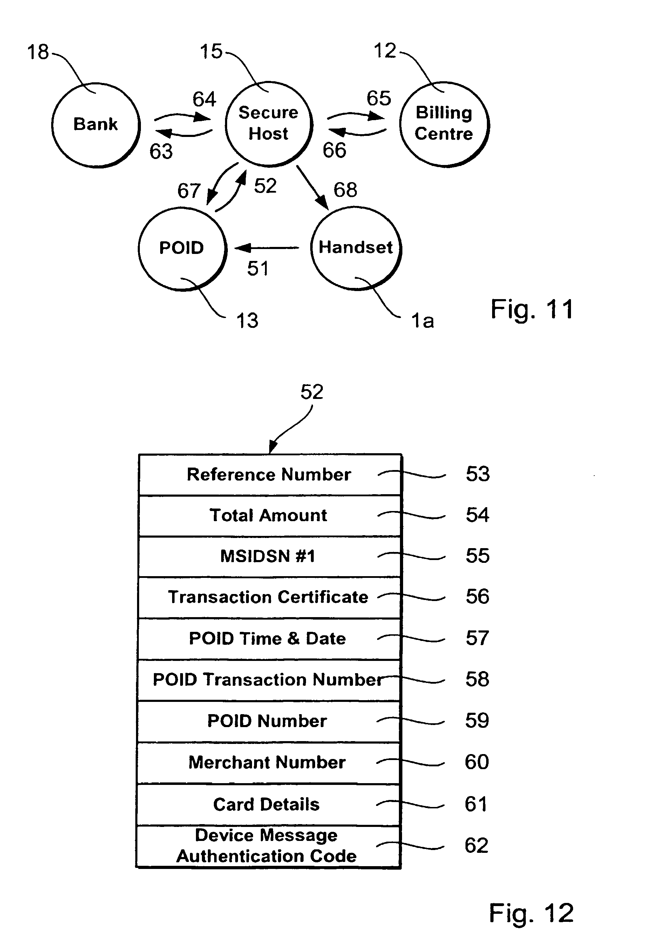

At this point, the first and second pre-pay accounts have not been credited. Before this happens, the request must be validated and a payment made. These steps are performed in a payment stage:
Referring to Figures 10 and 11, the first user walks up to one of the POIDs 13 and transmits a copy 51 of the response 40 over the wireless link by selecting a payment menu and pressing a key to effect transmission of a signal from the handset transceiver 21 to one of the POID transceivers 25 (step S10).

The POID 13 can validate the data received in the copy 51. If the data has been corrupted or tampered with or is invalid for any other reason, then the POID 13 can terminate the process. The POID 13 can then transmit a message to the secure host 15 notifying it of the failure and also display a message indicating to the user that the transaction has failed.

The POID 13, using the display 27, prompts the first user to pay and indicates the total amount, which in this example is "£30". The user swipes their credit card through the reader 24 (step S11). Alternatively, the user can pay in cash. If the user is roaming, then the POID 13 may also display the total amount in a local currency. Thus, if the user is British and is roaming in France, then the POID 13 displays "FF 300". This allows the user to make a cash payment using local currency.

Referring to Figure 12, the POID 13 sends a message 52 to the secure host 15 (step S12). The message 52 comprises a reference number 53 which is a copy of the reference number 42 sent to the handset 1a, the total amount 54, a number 55 for identifying the MSISDN of the handset that is requesting the pre-payment, a transaction certificate 56 which is a copy of the transaction certificate 49 sent to the handset 1a, a timestamp 57 at which payment was made, a transaction number 58 for identifying the transaction at the POID 13, a device number 59 for identifying the POID 13, a merchant number 60 for identifying the vendor, encrypted credit card details 61 and a message authentication code 62, again for checking whether the data has been corrupted or tampered with. It will be appreciated that if the user has paid with cash, then no card details 61 are sent.

The secure host 15 then validates the details contained in the message 52 (step S13). This includes comparing the transactions certificate 56 with a copy of the transaction certificate 49 computed from data held in its database 30 and checking that payment has been made before the expiry date. The secure host 15 may also send a message 63 to the bank 18 (step S14). The message 63 includes details relating to the credit card to allow the bank to check card authenticity (step S15). If the card details are authentic, then the bank 18 returns an acceptance message 64 to the secure host 15 (step S16). Of course, if the user has paid with cash, then steps S15 and S16 are not needed.

At this point, the secure host 15 has validated the request 33 and checked the authorisation of the credit card.

The secure host 15 sends a notification 65 to the billing centre 12 indicating the identity of the first and second pre-pay accounts and the amount to be credited to the accounts (step S17). The billing centre 12 updates the first and second pre-pay accounts (step S18) and returns an acknowledgement message 66 (step S19).

The secure host 15 sends a confirmation message 67 to the POID 13 (step S20) which informs the user that the crediting process has been completed (step S21). The POID 13 may print an acknowledgement (not shown) for the user.

The secure host 15 sends a confirmation message 68 to the first handset 12a outlining the transaction (step S22). The secure host 15 may also send details to the second handset 1b.

At this point the first and second accounts have been credited and, if they were depleted before the crediting process began, the handsets 1a, 1b can be used.

If the secure host 15 or the bank 18 find that the message 52 has been corrupted, tampered with or otherwise invalid or that the payment is insufficient, blocked or otherwise irregular, then the transaction is terminated and the secure host 15 issues a rejection message (not shown) to the POID 13 and, optionally, a further rejection message to the handset 1a. The rejection message may invite the user to re-try, for example by re-transmitting the copy 51 and/or using a different credit card. Alternatively, the user may be barred from making further validation attempts at the POID 13. The secure host 15 may set a flag (not shown) indicating that an invalid attempt to validate the request has been made. Thus, it can reject further validation attempts made by the handset 1a made at any POID 13. The secure host 15 can also reject new crediting requests from the handset 1a. The billing centre 12 may also be informed of the invalid attempt to validate the request. Thus, the operators of PLMN 2 may take appropriate steps, such as preventing calls being made from the first handset 1a.

Although the embodiment described above shows a user terminal accessing the secure host 15 through a PLMN to which the billing centre is attached, this need not be the case. For example, the user may be roaming in a visited PLMN (not shown). The user sends a request 33 to the secure host 15 using service provided by the visited PLMN (not shown). The secure host 15 then interrogates the billing centre 12 of the home PLMN, namely PLMN 2. The response 40 is returned though the visited PLMN. The user then validates the request as before by accessing one of the POIDs 13.

This process has several advantages. Firstly, the first user can credit not only the first pre-pay account associated with the first handset 1 a, but also the second pre-pay account associated with the second handset 1 b. This is convenient where the first user is a parent and the second user is a son or daughter. Furthermore, the user can prepare the request at their leisure. However, because the relevant details have already been entered and are easily transferred over the wireless link, validation is quick and straightforward. Moreover, the user can pre-pay virtually anywhere in the world. The POIDs are not network specific. Thus, the user can send a request when roaming in a visited network and pay at any POID. If the transaction is performed abroad, then the user can pay in local currency using cash or in their home currency using a payment card. In addition, this arrangement does not require further modification of handset hardware, thus allowing existing handsets to be used. Importantly, the arrangement is secure and makes fraudulent transactions more difficult. A handset is required both for making the request and for validation. Thus, it becomes much more difficult to perform a fraudulent transaction using the POID alone.

If the first user is planning to travel abroad, they can carry out the request stage prior to departure. There is no obligation to complete the transaction by performing the payment stage. Therefore, the user can travel with the knowledge that they can credit their account, if necessary, without incurring expensive international call charges.

A process by which credit is deducted from an account, for example the first account, will briefly be described.

Referring once again to Figure 1, the user initiates a call from the first handset 1a. This comprises sending a request to establish a call which is received by one of the MSCs 5. The handset 1a is recognised as being a pre-paid handset. Therefore, the MSC 5 notifies the billing centre 12. The computer 23 retrieves details of the first account from the database 22 and computes available call time remaining in the account. If the account is depleted, then there is zero available call time and the call is terminated. If, however, credit is still available, then the call is allowed to proceed and a timer, measuring elapsed call time, is started. If, during the call, the elapsed call time exceeds the available call time, then the call is terminated. At the end of the call, the call time is measured and the cost of the call is computed. The cost is deducted from the first account.

In the process just described, the handset 1a is located in an area served by the PLMN 2. Those skilled in the art will understand that the process can be modified to allow the user to place a call using the first handset 1a from a visited PLMN (not shown).

It will be appreciated that the handset 1a may be wireless application protocol (WAP)-enabled or SIM-toolkit-enabled for use with a wireless internet gateway (WIG) or support general packet radio services (GPRS). Alternatively, the handset 1a may be a 3g handset for use in universal mobile telecommunication system (UMTS) or wideband code-division multiple access (W-CDMA) networks. Thus, the request 33 and the response 40 can be sent by methods other than short message service (SMS).

The POID and secure host may be connected by various types of physical links including via satellite, by a microwave link or by fibre optic or through a PSTN or a PLMN network, such as a GSM network.

The PLMN and the secure host may be connected using other types of networks.

It will also be appreciated that any type of payment card including debit cards, electronic money cards and chip cards issued by financial institutions may be used instead of a credit card as a means for payment.

## Claims

1. A method of crediting an account comprising:
in a request stage:
transmitting, from a mobile communications device (1a) to a host (15), a request (33) to credit one or more accounts associated with one or more mobile communications devices (1a, 1b), said request (33) including information relating to said one or more mobile communications devices;
the host confirming existence of the one or more accounts;
in dependence upon the one or more accounts existing, transmitting, from said host (15) to said mobile communications device (1a) a response (40), including validating information for validating the request;
the host storing the validating information; and
the mobile communications device (1a) storing the response (40);
in a payment stage:
transmitting, from said mobile communications device (1a) to a payment device (13) a first message (51) including the validating information;
making a payment at the payment device (13), wherein the payment device receives the payment in addition to the validating information;
transmitting, from said payment device (13) to said host a second message (52) including the validating information and information relating to the payment; and
the host comparing the validating information received from the payment device with the validating information stored by the host and, in dependence upon validating the validating information received from the payment device with the validating information stored by the host, causing crediting of said one or more accounts.

2. A method according to any preceding claim, wherein said transmitting of said request (33) includes indicating the identities of said one or more mobile communications devices (1a, 1b).

3. A method according to claim 2, wherein said indicating of said identities of said one or more mobile communications devices (1a, 1b) comprises transmitting MSISDNs (34a, 34b, 34c) corresponding to said one or more mobile communications devices.

4. A method according to any preceding claim, wherein said transmitting of said request (33) includes indicating a respective amount (35a, 35b, 35c) to be credited to each of said one or more accounts

5. A method according to any preceding claim, wherein said transmitting of said request (33) includes indicating a period of time (37) for completing a payment process.

6. A method according to any preceding claim, wherein said transmitting of said request (33) comprises sending a text message.

7. A method according to any preceding claim, further comprising forwarding, from said host (15) to a billing centre (12) for managing some or all of said one or more accounts, some or all of said information included in said request (33) and/or information relating to some or all of said one or more mobile communications devices.

8. A method according to claim 7, further comprising, at said billing centre (12), checking said forwarded information and/or transmitting, from said billing centre (12) to said host (15), an acceptance message (39).

9. A method according to any preceding claim, further comprising, at said host (15), preparing said response (40).

10. A method according to any preceding claim, wherein said transmitting of said response (40) includes indicating a response code (41) for specifying a successful request.

11. A method according to any preceding claim, wherein said transmitting of said response (40) includes indicating a reference number (42) for allowing a billing centre to identify said request.

12. A method according to any preceding claim, wherein said transmitting of said response (40) includes indicating a sequence number (43) for allowing said host to identify said request for crediting said accounts.

13. A method according to any preceding claim, wherein said transmitting of said response (40) includes indicating an expiry date (44) for completing a payment process.

14. A method according to any preceding claim, wherein said transmitting of said response (40) includes indicating an amount (45) to be paid.

15. A method according to any preceding claim, wherein said transmitting of said response (40) includes indicating a number (46) identifying said mobile communications device (1a).

16. A method according to any preceding claim, wherein said transmitting of said response (40) includes indicating a currency code (47) for identifying payment currency.

17. A method according to any preceding claim, wherein said transmitting of said response (40) includes indicating a country code (48) for identifying a country in which the mobile communications device has a home network.

18. A method according to any preceding claim, wherein said transmitting of said response (40) includes sending a transaction certificate (49) for validating said request at the payment stage.

19. A method according to any preceding claim, wherein said transmitting of said response (40) includes sending an authentication code (50) for determining whether said response has been corrupted or tampered with.

20. A method according to any preceding claim, wherein transmitting of said first message (51) comprises sending a copy of said response (40).

21. A method according to any preceding claim, wherein said transmitting of the first message (51) comprises sending signals over a wireless link (21, 25).

22. A method according to claim 21, wherein said sending signals over said wireless link (21, 25) comprises transmitting said signals using infrared radiation.

23. A method according to claim 21, wherein said sending signals over said wireless link (21, 25) comprises transmitting said signals using radio.

24. A method according to any preceding claim further comprising transmitting a third message (63), from said host (15) to a bank (18), for requesting authentication of payment card details.

25. A method according to claim 24 further comprising sending a fourth message (64), from said bank (18) to said host (15), for indicating authentication of said payment card details.

26. A method according to any preceding claim, further comprising transmitting, from said host (15) to a billing centre (12), a fifth message (65) for notifying said billing centre that the request has been validated and payment received.

27. A method according to claim 26, further comprising transmitting, from said billing centre (12) to said host (15), a sixth message (66) for acknowledging said notification.

28. A method according to any preceding claim, further comprising transmitting, from said host (15) to said payment device (13), a seventh message (67) confirming that the request has been validated and the payment received.

29. A method according to any preceding claim, further comprising, transmitting, from said host (15) to said mobile communications device (1a), an eighth message (68) confirming that the request has been validated and the payment received.

30. Apparatus for crediting an account comprising:
a mobile communications device (1a);
a host (15); and
a payment device (13);
the mobile communications device (1a) configured:
to transmit, to a host (15), a request (33) to credit one or more accounts associated with one or more mobile communications devices (1a, 1b), said request (33) including information relating to said one or more mobile communications devices;
the host (15) configured:
to confirm existence of the one or more accounts;
in dependence upon the one or more accounts existing, to transmit, to said mobile communications device (1a) including a response (40) including validating information for validating the request; and
to store the validating information;
the mobile communications device (1a) further configured:
to store the response (40) ; and
to transmit, to the payment device (13) a first message (51) including the validating information
the payment device (13) configured:
to receive a payment in addition to the validating information; and
in response to the payment being made at the payment device, to transmit, to said host a second message (52) including the validating information and information relating to the payment;
the host (15) further configured:
to compare the validating information received from the payment device with the validating information stored by the host and
in dependence upon validating the validating information received from the payment device with the validating information stored by the host, to cause crediting of said one or more accounts.

## Patentansprüche

1. Verfahren zum Durchführen einer Gutschrift für ein Konto, umfassend:
in einer Anfragestufe:
Übertragen einer Anfrage (33) zum Durchführen einer Gutschrift für ein oder mehrere Konten in Zusammenhang mit einer oder mehreren mobilen Kommunikationsvorrichtungen (1a, 1b) von einer mobilen Kommunikationsvorrichtung (1a) zu einem Host (15), wobei die Anfrage (33) Informationen betreffend die eine oder mehreren mobilen Kommunikationsvorrichtungen enthält;
wobei der Host die Existenz des einen oder der mehreren Konten bestätigt;
in Abhängigkeit von der Existenz des einen oder der mehreren Konten, Übertragen einer Antwort (40), die Validierungsinformationen zum Validieren der Anfrage enthält, von dem Host (15) zu der mobilen Kommunikationsvorrichtung (1a);
wobei der Host die Validierungsinformationen speichert; und
wobei die mobile Kommunikationsvorrichtung (1a) die Antwort (40) speichert;
in einer Zahlungsstufe:
Übertragen einer ersten Nachricht (51), die die Validierungsinformationen enthält, von der mobilen Kommunikationsvorrichtung (1 a) zu einer Zahlungsvorrichtung (13);
Durchführen einer Zahlung an der Zahlungsvorrichtung (13), wobei die Zahlungsvorrichtung die Zahlung zusätzlich zu den Validierungsinformationen empfängt;
Übertragen einer zweiten Nachricht (52), die die Validierungsinformationen und Informationen betreffend die Zahlung enthält, von der Zahlungsvorrichtung (13) zu dem Host; und
wobei der Host die von der Zahlungsvorrichtung empfangenen Validierungsinformationen mit den vom Host gespeicherten Validierungsinformationen vergleicht und in Abhängigkeit von der Validierung der von der Zahlungsvorrichtung empfangenen Validierungsinformationen mit den vom Host gespeicherten Validierungsinformationen veranlaßt, dass eine Gutschrift für das eine oder die mehreren Konten durchgeführt wird.

2. Verfahren nach einem der vorhergehenden Ansprüche, wobei das Übertragen der Anfrage (33) eine Angabe der Identitäten der einen oder der mehreren mobilen Kommunikationsvorrichtungen (1a, 1b) enthält.

3. Verfahren nach Anspruch 2, wobei die Angabe der Identitäten der einen oder der mehreren mobilen Kommunikationsvorrichtungen (1a, 1b) eine Übertragung von MSISDNs (34a, 34b, 34c) entsprechend der einen oder den mehreren mobilen Kommunikationsvorrichtungen umfaßt.

4. Verfahren nach einem der vorhergehenden Ansprüche, wobei die Übertragung der Anfrage (33) eine Angabe eines jeweiligen Betrags (35a, 35b, 35c) enthält, der jedem des einen oder der mehreren Konten gutgeschrieben werden soll.

5. Verfahren nach einem der vorhergehenden Ansprüche, wobei die Übertragung der Anfrage (33) die Angabe einer Zeitdauer (37) für die vollständige Durchführung eines Zahlungsprozesses enthält.

6. Verfahren nach einem der vorhergehenden Ansprüche, wobei die Übertragung der Anfrage (33) das Senden einer Textnachricht umfaßt.

7. Verfahren nach einem der vorhergehenden Ansprüche, ferner umfassend das Weiterleiten einiger oder aller Informationen, die in der Anfrage (33) enthalten sind, und/oder von Informationen betreffend einige oder alle von der einen oder den mehreren mobilen Kommunikationsvorrichtungen von dem Host (15) zu einem Abrechnungszentrum (12).

8. Verfahren nach Anspruch 7, ferner umfassend ein Überprüfen der weitergeleiteten Informationen bei dem Abrechnungszentrum (12) und/oder ein Übertragen einer Akzeptanznachricht (39) von dem Abrechnungszentrum (12) zu dem Host (15).

9. Verfahren nach einem der vorhergehenden Ansprüche, ferner umfassend das Vorbereiten der Antwort (40) bei dem Host (15).

10. Verfahren nach einem der vorhergehenden Ansprüche, wobei das Übertragen der Antwort (40) die Angabe eines Antwortcodes (41) zum Spezifizieren einer erfolgreichen Anfrage enthält.

11. Verfahren nach einem der vorhergehenden Ansprüche, wobei das Übertragen der Antwort (40) die Angabe einer Referenznummer (42) enthält, um es einem Abrechnungszentrum zu erlauben, die Anfrage zu identifizieren.

12. Verfahren nach einem der vorhergehenden Ansprüche, wobei das Übertragen der Antwort (40) die Angabe einer Sequenznummer (43) enthält, um es dem Host zu erlauben, die Anfrage zu identifizieren, um die Gutschriften für die Konten durchzuführen.

13. Verfahren nach einem der vorhergehenden Ansprüche, wobei das Übertragen der Antwort (40) die Angabe eines Ablaufdatums (44) für die vollständige Durchführung eines Zahlungsprozesses enthält.

14. Verfahren nach einem der vorhergehenden Ansprüche, wobei das Übertragen der Antwort (40) die Angabe eines zu zahlenden Betrags (45) enthält.

15. Verfahren nach einem der vorhergehenden Ansprüche, wobei das Übertragen der Antwort (40) die Angabe einer Nummer (46) enthält, die die mobile Kommunikationsvorrichtung (1a) identifiziert.

16. Verfahren nach einem der vorhergehenden Ansprüche, wobei das Übertragen der Antwort (40) die Angabe eines Währungscodes (47) zum Identifizieren der Zahlungswährung enthält.

17. Verfahren nach einem der vorhergehenden Ansprüche, wobei das Übertragen der Antwort (40) die Angabe eines Ländercodes (48) enthält, um ein Land zu identifizieren, in dem die mobile Kommunikationsvorrichtung ein Heimnetzwerk hat.

18. Verfahren nach einem der vorhergehenden Ansprüche, wobei das Übertragen der Antwort (40) das Senden eines Transaktionszertifikats (49) enthält, um die Anfrage in der Zahlungsstufe zu validieren.

19. Verfahren nach einem der vorhergehenden Ansprüche, wobei das Übertragen der Antwort (40) das Senden eines Authentifizierungscodes (50) enthält, um zu bestimmen, ob die Antwort beschädigt oder manipuliert wurde.

20. Verfahren nach einem der vorhergehenden Ansprüche, wobei das Übertragen der ersten Nachricht (51) das Senden einer Kopie der Antwort (40) umfaßt.

21. Verfahren nach einem der vorhergehenden Ansprüche, wobei das Übertragen der ersten Nachricht (51) das Senden von Signalen über eine drahtlose Verbindung (21, 25) umfaßt.

22. Verfahren nach Anspruch 21, wobei das Senden von Signalen über die drahtlose Verbindung (21, 25) das Übertragen der Signale unter Verwendung von Infrarotstrahlung umfaßt.

23. Verfahren nach Anspruch 21, wobei das Senden von Signalen über die drahtlose Verbindung (21, 25) das Übertragen der Signale unter Verwendung von Funk umfaßt.

24. Verfahren nach einem der vorhergehenden Ansprüche, ferner umfassend das Übertragen einer dritten Nachricht (63) von dem Host (15) an eine Bank (18), um eine Authentifizierung von Zahlungskartendetails anzufragen.

25. Verfahren nach Anspruch 24, ferner umfassend das Senden einer vierten Nachricht (64) von der Bank (18) an den Host (15), um eine Authentifizierung der Zahlungskartendetails anzuzeigen.

26. Verfahren nach einem der vorhergehenden Ansprüche, ferner umfassend das Übertragen einer fünften Nachricht (65) von dem Host (15) an ein Abrechnungszentrum (12), um das Abrechnungszentrum zu benachrichtigen, dass die Anfrage validiert wurde und die Zahlung empfangen wurde.

27. Verfahren nach Anspruch 26, ferner umfassend das Übertragen einer sechsten Nachricht (66) von dem Abrechnungszentrum (12) an den Host (15), um die Benachrichtigung zu bestätigen.

28. Verfahren nach einem der vorhergehenden Ansprüche, ferner umfassend das Übertragen einer siebten Nachricht (67), welche bestätigt, dass die Anfrage validiert wurde und die Zahlung empfangen wurde, von dem Host (15) an die Zahlungsvorrichtung (13).

29. Verfahren nach einem der vorhergehenden Ansprüche, ferner umfassend das Übertragen einer achten Nachricht (68), die bestätigt, dass die Anfrage validiert wurde und die Zahlung empfangen wurde, von dem Host (15) an die mobile Kommunikationsvorrichtung (1a).

30. Gerät zum Durchführen einer Gutschrift für ein Konto, umfassend:
eine mobile Kommunikationsvorrichtung (1a);
einen Host (15); und
eine Zahlungsvorrichtung (13);
wobei die mobile Kommunikationsvorrichtung (1a) dazu ausgelegt ist, an einen Host (15) eine Anfrage (33) zur Durchführung einer Gutschrift für ein oder mehrere Konten in Zusammenhang mit einer oder mehreren mobilen Kommunikationsvorrichtungen (1a, 1b) zu übertragen, wobei die Anfrage (33) Informationen betreffend die eine oder die mehreren mobilen Kommunikationsvorrichtungen enthält;
wobei der Host (15) dazu ausgelegt ist,
die Existenz des einen oder der mehreren Konten zu bestätigen;
in Abhängigkeit von der Existenz des einen oder der mehreren Konten an die mobile Kommunikationsvorrichtung (1a) eine Antwort (40) zu übertragen, die Validierungsinformationen zum Validieren der Anfrage enthält; und
die Validierungsinformationen zu speichern;
wobei die mobile Kommunikationsvorrichtung (1a) ferner dazu ausgelegt ist:
die Antwort (40) zu speichern; und
an die Zahlungsvorrichtung (13) eine erste Nachricht (51) zu übertragen, die die Validierungsinformationen enthält;
wobei die Zahlungsvorrichtung (13) dazu ausgelegt ist:
eine Zahlung zusätzlich zu den Validierungsinformationen zu empfangen; und
in Antwort auf die bei der Zahlungsvorrichtung durchgeführte Zahlung an den Host eine zweite Nachricht (52) zu übertragen, die die Validierungsinformationen und Informationen bezüglich der Zahlung enthält;
wobei der Host (15) ferner dazu ausgelegt ist:
die von der Zahlungsvorrichtung empfangenen Validierungsinformationen mit den durch den Host gespeicherten Validierungsinformationen zu vergleichen, und
in Abhängigkeit von der Validierung der von der Zahlungsvorrichtung empfangenen Validierungsinformationen mit den vom Host gespeicherten Validierungsinformationen zu veranlassen, dass eine Gutschrift für das eine oder die mehreren Konten durchgeführt wird.

## Revendications

1. Procédé pour approvisionner un compte comprenant les étapes consistant à :
dans une phase de demande :
transmettre, depuis un dispositif de communications mobile (1a) à un hôte (15), une demande (33) d'approvisionnement d'un ou de plusieurs comptes associés à un ou plusieurs dispositifs de communications mobiles (1a, 1b), ladite demande (33) comprenant des informations concernant lesdits un ou plusieurs dispositifs de communications mobiles ;
l'hôte confirmant l'existence des un ou plusieurs comptes ;
en fonction des un ou plusieurs comptes existants, transmettre, dudit hôte (15) audit dispositif de communications mobile (1a), une réponse (40), comprenant des informations de validation pour valider la demande ;
l'hôte stockant les informations de validation ; et
le dispositif de communications mobile (1a) stockant la réponse (40) ;
dans une phase de paiement :
transmettre, dudit dispositif de communications mobile (1a) à un dispositif de paiement (13), un premier message (51) comprenant les informations de validation ;
effectuer un paiement au dispositif de paiement (13), le dispositif de paiement recevant le paiement en plus des informations de validation ;
transmettre, dudit dispositif de paiement (13) audit hôte, un deuxième message (52) comprenant les informations de validation et des informations ayant trait au paiement ; et
l'hôte comparant les informations de validation reçues du dispositif de paiement avec les informations de validation stockées par l'hôte et, en fonction de la validation des informations de validation reçues du dispositif de paiement et des informations de validation stockées par l'hôte, approvisionnant lesdits un ou plusieurs comptes.

2. Procédé selon l'une quelconque des revendications précédentes, dans lequel ladite transmission de ladite requête (33) comprend l'indication de l'identité desdits un ou plusieurs dispositifs de communications mobiles (1a, 1b).

3. Procédé selon la revendication 2, dans lequel ladite indication de ladite identité desdits un ou plusieurs dispositifs de communications mobiles (1a, 1b) comprend la transmission des MSISDN (34a, 34b, 34c) correspondant auxdits un ou plusieurs dispositifs de communications mobiles.

4. Procédé selon l'une quelconque des revendications précédentes, dans lequel ladite transmission de ladite requête (33) comprend l'indication d'un montant respectif (35a, 35b, 35c) devant être approvisionné sur chacun desdits un ou plusieurs comptes.

5. Procédé selon l'une quelconque des revendications précédentes, dans lequel ladite transmission de ladite requête (33) comprend l'indication d'une durée (37) pour acquitter un paiement.

6. Procédé selon l'une quelconque des revendications précédentes, dans lequel ladite transmission de ladite requête (33) comprend l'envoi d'un message texte.

7. Procédé selon l'une quelconque des revendications précédentes, comprenant, en outre, l'étape consistant à faire suivre, dudit hôte (15) à un centre de facturation (12) pour la gestion d'une partie ou de la totalité desdits un ou plusieurs comptes, tout ou partie desdites informations comprises dans ladite demande (33) et/ou des informations ayant trait à tout ou partie desdits un ou plusieurs dispositifs de communications mobiles.

8. Procédé selon la revendication 7, comprenant, en outre, audit centre de facturation (12), la vérification desdites informations que l'on a fait suivre et/ou la transmission, dudit centre de facturation (12) audit hôte (15), d'un message d'acceptation (39).

9. Procédé selon l'une quelconque des revendications précédentes, comprenant, en outre, audit hôte (15), la préparation de ladite réponse (40).

10. Procédé selon l'une quelconque des revendications précédentes, dans lequel ladite transmission de ladite réponse (40) comprend l'indication d'un code de réponse (41) pour spécifier une demande qui a abouti.

11. Procédé selon l'une quelconque des revendications précédentes, dans lequel ladite transmission de ladite réponse (40) comprend l'indication d'un numéro de référence (42) pour permettre à un centre de facturation d'identifier ladite demande.

12. Procédé selon l'une quelconque des revendications précédentes, dans lequel ladite transmission de ladite réponse (40) comprend l'indication d'un numéro de séquence (43) pour permettre audit hôte d'identifier ladite demande pour approvisionner lesdits comptes.

13. Procédé selon l'une quelconque des revendications précédentes, dans lequel ladite transmission de ladite réponse (40) comprend l'indication d'une date d'expiration (44) pour acquitter un paiement.

14. Procédé selon l'une quelconque des revendications précédentes, dans lequel ladite transmission de ladite réponse (40) comprend l'indication d'un montant (45) à payer.

15. Procédé selon l'une quelconque des revendications précédentes, dans lequel ladite transmission de ladite réponse (40) comprend l'indication d'un numéro (46) identifiant ledit dispositif de communications mobile (1a).

16. Procédé selon l'une quelconque des revendications précédentes, dans lequel ladite transmission de ladite réponse (40) comprend l'indication d'un code de devise (47) pour identifier la devise du paiement.

17. Procédé selon l'une quelconque des revendications précédentes, dans lequel ladite transmission de ladite réponse (40) comprend l'indication d'un code de pays (48) pour identifier un pays dans lequel le dispositif de communications mobile (1a) a un réseau domestique.

18. Procédé selon l'une quelconque des revendications précédentes, dans lequel ladite transmission de ladite réponse (40) comprend l'envoi d'un certificat de transaction (49) pour valider ladite demande à la phase de paiement.

19. Procédé selon l'une quelconque des revendications précédentes, dans lequel ladite transmission de ladite réponse (40) comprend l'envoi d'un code d'authentification (50) pour déterminer si ladite réponse (40) a été corrompue ou trafiquée.

20. Procédé selon l'une quelconque des revendications précédentes, dans lequel la transmission dudit premier message (51) comprend l'envoi d'une copie de ladite réponse (40).

21. Procédé selon l'une quelconque des revendications précédentes, dans lequel ladite transmission du premier message (51) comprend l'envoi de signaux au moyen d'une liaison sans fil (21, 25).

22. Procédé selon la revendication 21, dans lequel ledit envoi de signaux au moyen de ladite liaison sans fil (21, 25) comprend la transmission desdits signaux par rayonnement infrarouge.

23. Procédé selon la revendication 21, dans lequel ledit envoi de signaux au moyen de ladite liaison sans fil (21, 25) comprend la transmission desdits signaux par radio.

24. Procédé selon l'une quelconque des revendications précédentes, comprenant, en outre, la transmission d'un troisième message (63), dudit hôte (15) à une banque (18), pour demander l'authentification de détails de carte de paiement.

25. Procédé selon la revendication 24, comprenant, en outre, l'envoi d'un quatrième message (64), de ladite banque (18) audit hôte (15), pour indiquer l'authentification desdits détails de carte de paiement.

26. Procédé selon l'une quelconque des revendications précédentes, comprenant, en outre, la transmission, dudit hôte (15) à un centre de facturation (12), d'un cinquième message (65) pour notifier audit centre de facturation que la demande a été validée et le paiement reçu.

27. Procédé selon la revendication 26, comprenant, en outre, la transmission, dudit centre de facturation (12) audit hôte (15), d'un sixième message (66) pour accuser réception de ladite notification.

28. Procédé selon l'une quelconque des revendications précédentes, comprenant, en outre, la transmission, dudit hôte (15) audit dispositif de paiement (13), d'un septième message (67) confirmant que la demande a été validée et le paiement reçu.

29. Procédé selon l'une quelconque des revendications précédentes, comprenant, en outre, la transmission, dudit hôte (15) audit dispositif de communications mobile (1a), d'un huitième message (68) confirmant que la demande a été validée et le paiement reçu.

30. Appareil pour approvisionner un compte comprenant :
un dispositif de communications mobile (1a) ;
un hôte (15) ;
un dispositif de paiement (13) ;
le dispositif de communications mobile (1a) étant configuré pour :
transmettre, à un hôte (15), une demande (33) d'approvisionnement d'un ou plusieurs comptes associés à un ou plusieurs dispositifs de communications mobiles (1a, 1b), ladite demande (33) comprenant des informations concernant lesdits un ou plusieurs dispositifs de communications mobiles ;
l'hôte (15) étant configuré pour :
confirmer l'existence des un ou plusieurs comptes ;
en fonction des un ou plusieurs comptes existants, transmettre, audit dispositif de communications mobile (1a), une réponse (40), comprenant des informations de validation pour valider la demande ; et
stocker les informations de validation ;
le dispositif de communications mobile (1a) étant, en outre, configuré pour :
stocker la réponse (40) ; et
transmettre, au dispositif de paiement (13), un premier message (51) comprenant les informations de validation ;
le dispositif de paiement (13) étant configuré pour :
recevoir un paiement en plus des informations de validation ; et
en réponse au paiement en cours au dispositif de paiement, transmettre, audit hôte, un deuxième message (52) comprenant les informations de validation et des informations ayant trait au paiement ;
l'hôte (15) étant, en outre, configuré pour :
comparer les informations de validation reçues du dispositif de paiement avec les informations de validation stockées par l'hôte et,
en fonction de la validation des informations de validation reçues du dispositif de paiement et des informations de validation stockées par l'hôte, approvisionner lesdits un ou plusieurs comptes.
